Europäisches Patentamt

European Patent Office

Office européen des brevets

(19)

(11) Numéro de publication: **0 074 905**
**B1**

# (12) FASCICULE DE BREVET EUROPEEN

(45) Date de publication du fascicule du brevet:
06.02.85

(21) Numéro de dépôt: 82401656.2

(22) Date de dépôt: 13.09.82

(51) Int. Cl.⁴: **F 02 D 23/00**

(54) **Dispositif de suralimentation d'un moteur à combustion interne.**

(30) Priorité: 15.09.81 FR 8117722

(43) Date de publication de la demande:
23.03.83 Bulletin 83/12

(45) Mention de la délivrance du brevet:
06.02.85 Bulletin 85/6

(84) Etats contractants désignés:
**DE GB IT**

(56) Documents cités:
**DE - A - 2 933 556**
**FR - A - 2 278 930**
**GB - A - 144 322**
**GB - A - 1 547 426**
**US - A - 3 651 636**

(73) Titulaire: **AUTOMOBILES CITROEN, 62 Boulevard Victor-Hugo, F-92200 Neuilly-sur-Seine (FR)**
Titulaire: **AUTOMOBILES PEUGEOT, 75, avenue de la Grande Armée, F-75116 Paris (FR)**

(72) Inventeur: **Lifermann, Michel Maurice Lucien, 4, rue du Pont Colbert, F-78000 Versailles (FR)**

(74) Mandataire: **Boivin, Claude, 9, rue Edouard-Charton, F-78000 Versailles (FR)**

ACTORUM AG

## Description

La présente invention concerne un dispositif de suralimentation d'un moteur à combustion interne, comprenant un compresseur d'air volumétrique entraîné par l'arbre de sortie du moteur et relié au circuit d'alimentation de ce moteur.

Dans la plupart des dispositifs de suralimentation actuellement réalisés, le compresseur est constitué sous la forme d'un turbocompresseur dont la turbine est entraînée par les gaz d'échappement du moteur et dont le compresseur alimente en air l'aspiration du moteur. Ces dispositifs comportent le plus souvent un régulateur à soupape qui ouvre un circuit de dérivation permettant d'évacuer directement des gaz vers l'échappement, sans passer par la turbine, dès que la pression à l'aspiration du moteur devient excessive.

Pour obtenir un rendement optimal du moteur, il serait souhaitable de le faire fonctionner en aspiration naturelle en régime de croisière modéré et en mode suralimenté à forte charge. Mais ce mode de fonctionnement n'est pratiquement pas possible avec les dispositifs de suralimentation à turbocompresseur et la régulation qu'ils impliquent.

Le brevet GB-A N° 144322 a pour objet un dispositif de suralimentation d'un moteur à combustion interne comprenant un compresseur d'air qui est entraîné par l'arbre de sortie du moteur et dont le conduit de refoulement est relié au circuit d'alimentation du moteur et comporte un élément de réglage associé à des moyens de commande, une butée pour limiter le mouvement du papillon des gaz du moteur, et des moyens reliant lesdits moyens de commande de l'élément de réglage à la pédale d'accélération de façon que cet élément soit normalement ouvert et se ferme progressivement lorsque le papillon des gaz est en butée et que la pédale d'accélération est déplacée davantage.

Il y a avantage à prévoir entre le compresseur et le moteur un embrayage enclenché uniquement lorsque le papillon des gaz est en butée. Le compresseur n'est ainsi mis en service que lorsque le moteur doit être suralimenté.

Il est impossible de prévoir un tel embrayage dans le dispositif de suralimentation du brevet GB-A N° 144322. En effet, dans ce dispositif, l'élément de réglage est constitué par un volet pouvant obturer une ouverture ménagée dans le conduit de refoulement du compresseur et débouchant à l'atmosphère. Lorsque cette ouverture est fermée, le moteur est suralimenté alors que, lorsqu'elle est ouverte, l'air refoulé par le compresseur s'échappe en majeure partie à travers elle. Or l'air d'alimentation d'un moteur doit être filtré et le filtre ne peut être placé que sur le conduit d'admission du compresseur. Il en résulte que, dans ce dispositif, le compresseur doit nécessairement être entraîné en permanence, même en l'absence de suralimentation.

La présente invention a pour objet un dispositif de suralimentation d'un moteur à combustion interne qui permet non seulement d'obtenir le fonctionnement optimal défini précédemment, mais encore d'arrêter le compresseur lorsque celui-ci est inutile.

Ce dispositif est caractérisé par le fait que le conduit d'admission du compresseur comporte un filtre et est relié en aval de ce filtre au conduit de refoulement par un circuit de dérivation sur lequel est interposé un volet de réglage associé à des moyens de commande et qui relie le collecteur d'admission du moteur à l'atmosphère par l'intermédiaire du filtre, lorsque le volet est ouvert, en ce qu'un embrayage est interposé entre le compresseur et l'arbre de sortie du moteur, et en ce que le dispositif comporte des moyens pour ne mettre en service l'embrayage que lorsque le papillon des gaz est en butée.

Aux charges relativement faibles, le papillon des gaz n'est pas en butée, le compresseur n'est pas entraîné et le volet de réglage est ouvert de sorte que le moteur n'est pas suralimenté.

Si le conducteur déplace davantage la pédale d'accélération, le papillon arrive en butée, le compresseur est mis en service et, à partir de ce moment, le volet de réglage se ferme progressivement au fur et à mesure que la course de la pédale augmente; la pression d'alimentation du moteur augmente en conséquence.

L'embrayage peut être électromagnétique. Dans ce cas, les moyens pour mettre en service l'embrayage peuvent comprendre un micro-contact interposé sur le circuit de commande de l'embrayage et propre à être commandé par un organe, par exemple une vis, solidaire du papillon des gaz.

Le papillon des gaz peut être commandé par une came comportant une gorge dans laquelle est engagé un câble relié à la pédale d'accélération. Dans ce cas, la came au lieu d'être solidaire du papillon, comme cela est usuel, peut être indépendante du papillon et reliée d'une part par des moyens élastiques à celui-ci, de façon à entraîner le papillon lorsqu'il n'est pas en butée, mais à pouvoir néanmoins pivoter lorsqu'il est en butée, et d'autre part par une liaison à mouvement perdu au volet de façon à pouvoir entraîner ce volet lorsque le papillon est en butée.

Il peut, par exemple, être prévu un levier monté pivotant autour de l'axe du papillon et relié par une tringlerie au volet, l'un des organes constitués par la came et le levier portant un doigt ou pion engagé dans une lumière ménagée dans l'autre organe.

On a décrit ci-après, à titre d'exemple non limitatif, un mode de réalisation du dispositif selon l'invention, avec référence au dessin annexé dans lequel:

la fig. 1 est un schéma du dispositif;
la fig. 2 montre en plan les moyens de commande du papillon des gaz et du volet de réglage;
la fig. 3 en est une vue en élévation.

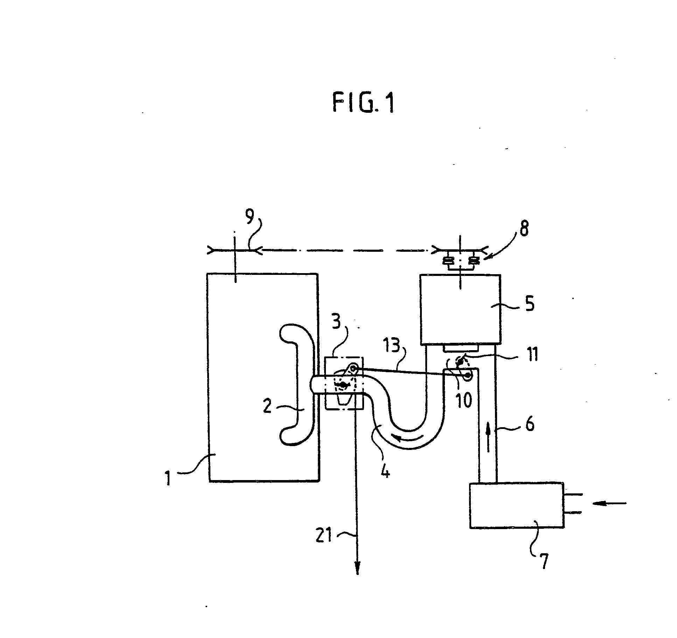

On voit, à la fig. 1, un moteur 1 dont le collecteur d'admission 2 est relié à la sortie d'un carburateur 3. L'entrée de ce carburateur est elle-même reliée par un conduit 4 à l'orifice de refoulement d'un compresseur volumétrique 5 dont on voit en 6 la conduite d'admission munie d'un filtre à air 7. Le compresseur 5 est entraîné par l'arbre de sortie du moteur 1, par l'intermédiaire d'un embrayage électromagnétique 8 et d'un dispositif de transmission 9 à poulies et courroie.

Un conduit de dérivation 10 relie les conduits 4 et 6. Le conduit 10 peut être plus ou moins fermé par un volet de court-circuitage 11 monté pivotant dans le conduit 10.

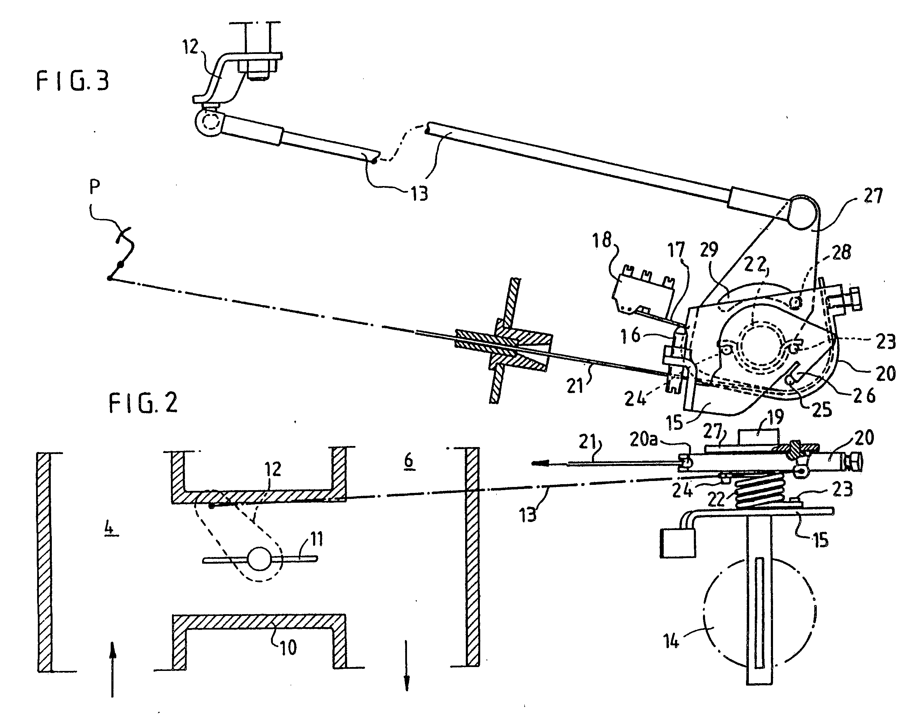

Comme on le voit plus particulièrement aux fig. 2 et 3, le volet de court-circuitage 11 est solidaire d'un levier 12 relié par une tringlerie 13 à la commande des gaz. Des moyens élastiques de rappel non représentés tendent à faire pivoter le volet 11 et le levier 12 vers une position dans laquelle le volet 11 libère pratiquement complètement le conduit de dérivation 10.

Le papillon des gaz 14 est associé de la manière usuelle à un ressort de rappel non représenté. Il est solidaire d'un support 15 pour une vis-pointeau 16 propre à actionner la lame de commande 17 d'un microcontact 18 interposé sur le circuit de commande de l'embrayage 8. Le support 15 peut, par ailleurs, venir au contact d'une butée fixe non représentée qui limite le mouvement de pivotement du papillon.

Sur l'axe 19 du papillon 14 est montée pivotante une came de commande 20 dans une gorge 20a de laquelle passe le câble de commande 21 relié à la pédale d'accélération P du moteur.

Un ressort hélicoïdal 22 est monté sur l'axe 19; ce ressort prend appui sur un pion 23 porté par le support 15 et sur un pion 24 porté par la came 20. Il tend ainsi à faire pivoter le papillon 14 dans le sens des aiguilles d'une montre par rapport à la came à la fig. 3, ce mouvement étant empêché par la rencontre d'un pion 25 solidaire de la came avec un doigt 26 du support 15. On voit ainsi que la came 20 entraîne le papillon 14 jusqu'à ce que celui-ci soit en butée, mais que la came peut ensuite continuer à pivoter en surmontant l'action du ressort 22, le pion 25 s'écartant du doigt 26. Lorsque le câble de commande 21 est ensuite relâché, la came 20 pivote en sens contraire sous l'action du ressort 22, puis tourne conjointement avec le papillon 14, sous l'action du ressort de rappel de ce papillon lorsque le pion 25 est venu en butée contre le doigt 26.

Sur l'axe 19 du papillon est également monté pivotant un levier 27 sur lequel est articulée la tringlerie 13 et qui est adjacent à la came 20. Celle-ci comporte un pion 28 engagé dans une lumière 29 du levier 27.

La disposition de la vis-pointeau 16 et celles du pion 28 et de la lumière 29 sont telles que, lorsque le papillon 14 arrive en butée, la vis 16 déplace la lame 17 et qu'en même temps le pion 28 arrive à l'extrémité de la lumière 29.

Le fonctionnement du dispositif de suralimentation qui vient d'être décrit ressort clairement de ce qui précède. En régime de croisière modéré, le papillon n'est pas en butée, le compresseur 5 n'est pas entraîné et le volet 11 est en position d'ouverture.

Si la course de la pédale d'accélération augmente, le papillon 14 arrive en butée et la vis 16 actionne le microcontact 18 de sorte que l'embrayage 8 se ferme et que le compresseur 5 est mis en fonctionnement.

La course de la pédale d'accélération continuant d'augmenter, la came 20 entraîne par l'intermédiaire du pion 28 le levier 27 qui pivote en entraînant à son tour le volet de court-circuitage 11 par l'intermédiaire de la tringlerie 13 et du levier 12. Le volet 11 se ferme progressivement; la pression de suralimentation augmente donc elle-même progressivement avec la course de la pédale d'accélération.

Il va de soi que la présente invention ne doit pas être considérée comme limitée au mode de réalisation décrit et représenté.

## Revendications

1. Dispositif de suralimentation d'un moteur à combustion interne (1) comprenant un compresseur d'air volumétrique (5) qui est entraîné par l'arbre de sortie du moteur (1), et dont le conduit de refoulement est relié au circuit d'alimentation de ce moteur et comporte un élément de réglage associé à des moyens de commande, une butée pour limiter le mouvement du papillon des gaz (14) du moteur, et des moyens (13) reliant lesdits moyens de commande de l'élément de réglage à la pédale d'accélération de façon que cet élément soit normalement ouvert et se ferme progressivement lorsque le papillon des gaz (14) du moteur est en butée et lorsque la pédale d'accélération est déplacée davantage, caractérisé par le fait que le conduit d'admission (6) du compresseur comporte un filtre (7) et est relié en aval de ce filtre au conduit de refoulement par un circuit de dérivation (10) sur lequel est interposé un volet de réglage (11) associé à des moyens de commande et qui relie le collecteur d'admission (2) du moteur à l'atmosphère par l'intermédiaire du filtre, lorsque le volet est ouvert, en ce qu'un embrayage (8) est interposé entre le compresseur (5) et l'arbre de sortie du moteur (1), et en ce que le dispositif comporte des moyens pour ne mettre en service l'embrayage (8) que lorsque le papillon des gaz (14) est en butée.

2. Dispositif selon la revendication 1, caractérisé en ce que l'embrayage (8) est électromagnétique et en ce que les moyens pour mettre en service cet embrayage comprennent un microcontact (18) interposé sur le circuit de commande de l'embrayage et propre à être commandé par un organe, par exemple une vis (16) solidaire du papillon des gaz (14).

3. Dispositif selon l'une des revendications précédentes, dans lequel le papillon des gaz est commandé par une came (20) comportant une gorge (20a) dans laquelle est engagé un câble (21) relié à la pédale d'accélération, caractérisé en ce que la came (20) est indépendante du papillon et reliée d'une part par des moyens élastiques (22) à celui-ci, de façon à entraîner le papillon (14) lorsqu'il n'est pas en butée mais à pouvoir néanmoins pivoter lorsqu'il est en butée, et d'autre part par une liaison à mouvement perdu au volet (11) de façon à pouvoir entraîner ce volet lorsque le papillon est en butée.

4. Dispositif selon la revendication 3, caractérisé en ce qu'il comporte un levier (27) monté pivotant autour de l'axe du papillon (14) et relié par une tringlerie (13) au volet (11), l'un des organes constitué par la came (20) et le levier (27) portant un doigt ou pion (28) engagé dans une lumière (29) ménagée dans l'autre organe.

## Patentansprüche

1. Aufladevorrichtung für eine Brennkraftmaschine mit einem volumetrischen Luftverdichter (5), der von der Abtriebswelle des Motors (1) angetrieben wird und dessen Druckleitung mit der Ansaugleitung dieses Motors verbunden ist und ein einer Steuereinrichtung zugeordnetes Regelglied aufweist, mit einem Anschlag zur Begrenzung der Bewegung der Gas-Drosselklappe (14) des Motors und mit einer Einrichtung (13), welche diese Steuereinrichtung des Regelgliedes mit dem Gaspedal in der Weise verbindet, dass dieses Glied normalerweise geöffnet ist und sich progressiv schliesst, wenn die Drosselklappe (14) des Motors am Anschlag ist und wenn das Gaspedal weiter verstellt wird, dadurch gekennzeichnet, dass die Einlassleitung (6) des Verdichters ein Filter (7) aufweist und stromabwärts von diesem Filter mit der Auslassleitung durch eine Bypass-Leitung (10) verbunden ist, in die eine der Steuereinrichtung zugeordnete Regelklappe (11) eingesetzt ist und die die Einlass-Sammelleitung (2) des Motors mit der Atmosphäre unter Zwischenschaltung des Filters verbindet, wenn die Regelklappe geöffnet ist, dadurch, dass zwischen dem Verdichter (5) und der Abtriebswelle des Motors (1) eine Kupplung (8) angeordnet ist, und dass die Vorrichtung eine Einrichtung aufweist, um zu verhindern, dass die Kupplung (8) betätigt wird, wenn die Gas-Drosselklappe (14) am Anschlag ist.

2. Aufladevorrichtung nach Anspruch 1, dadurch gekennzeichnet, dass die Kupplung (8) eine elektromagnetische Kupplung ist, und dass die Einrichtung zur Betätigung dieser Kupplung einen Mikroschalter (18) aufweist, der in den Steuerkreis für die Kupplung eingesetzt ist und durch ein Organ, beispielsweise eine mit der Drosselklappe (14) verbundene Schraube (16), betätigt werden kann.

3. Aufladevorrichtung nach einem der vorhergehenden Ansprüche, bei welcher die Gas-Drosselklappe durch einen Nocken (20) mit einer Nut (20a) betätigt wird, an welcher ein mit dem Gaspedal verbundenes Seil (21) angreift, dadurch gekennzeichnet, dass der Nocken (20) unabhängig von der Drosselklappe und einerseits durch eine federnde Einrichtung (22) mit dieser verbunden ist in der Weise, dass er die Drosselklappe (14) mitnimmt, wenn sie nicht am Anschlag ist, dass er sich aber trotzdem drehen kann, wenn sie am Anschlag ist, und dass der Nocken andererseits durch eine Verbindung mit totem Gang mit der Regelklappe (11) verbunden ist, so dass er diese Klappe mitnehmen kann, wenn die Drosselklappe am Anschlag ist.

4. Aufladevorrichtung nach Anspruch 3, dadurch gekennzeichnet, dass sie einen Hebel (27) aufweist, der um die Achse der Drosselklappe (14) schwenkbar und durch ein Gestänge (13) mit der Regelklappe (11) verbunden ist, wobei das eine der Gestängeteile durch den Nocken (20) und den Hebel (27) gebildet ist und dieser Hebel einen Finger oder Stein (28) trägt, der in einen in dem anderen Teil angebrachten Schlitz (29) eingreift.

## Claims

1. A supercharging device for an internal combustion engine (1) comprising a volumetric air compressor (5) which is driven by the output shaft of the engine (1), and whose delivery duct is connected to the supply circuit for this engine and comprises an adjustment element associated with control means, a stop for limiting the movement of the throttle valve (14) of the engine and means (13) connecting said means controlling the adjustment element to the accelerator pedal so that this element is normally open and closes progressively when the throttle valve of the engine is in abutment and when the accelerator pedal is moved further, characterized by the fact that the intake duct (6) of the compressor comprises a filter (7) and is connected downstream of this filter to the delivery duct by a by-pass circuit (10) in which is inserted an adjusting valve (11) associated with control means and which connects the intake manifold (2) of the engine to the atmosphere through the filter, when the valve is open, in that a clutch (8) is inserted between the compressor (5) and the output shaft of the engine (1), and in that the device comprises means for bringing the clutch (8) into service only when the throttle valve (14) is in abutment.

2. Device according to claim 1, characterized in that the clutch (8) is electro-magnetic and in that the means for bringing this clutch into service comprise a microcontact (18) inserted in the control circuit of the clutch and adapted to be controlled by a member, for example a screw (16) integral with the throttle valve (14).

3. Device according to one of the preceding claims, wherein the throttle valve is controlled by a cam (20) comprising a groove (20a) in which is engaged a cable (21) connected to the accelerator pedal, characterized in that the cam (20) is independent of the throttle valve and is connected on the one hand by resilient means (22) thereto, so as to drive the throttle valve (14) when it is not in abutment but so as to be able nevertheless to pivot when it is in abutment and on the other hand by an idle motion connection to the valve (11) so as to be able to drive this valve when the throttle valve is in abutment.

4. Device according to claim 3, characterized in that it comprises a lever (27) mounted for pivoting about the axis of the throttle valve (14) and connected by a linkage (13) to the valve (11), one of the members formed by the cam (20) and the lever (27) having a finger or stud (28) engaged in an aperture (29) formed in the other member.

0 074 905

# FIG.1

7

FIG.3

FIG.2